Europäisches Patentamt

European Patent Office

Office européen des brevets

(11) Veröffentlichungsnummer: **0 411 342 A1**

## (12) EUROPÄISCHE PATENTANMELDUNG

(21) Anmeldenummer: 90112967.6

(22) Anmeldetag: 06.07.90

(51) Int. Cl.⁵: **B62D 25/16**

(30) Priorität: 03.08.89 DE 3925774

(43) Veröffentlichungstag der Anmeldung:
06.02.91 Patentblatt 91/06

(84) Benannte Vertragsstaaten:
AT BE CH DE DK ES FR GB GR IT LI LU NL SE

(71) Anmelder: Dunlop GmbH
Birkenhainer Strasse 77
D-6450 Hanau(DE)

(72) Erfinder: Demirsoy, Nuri
Johannesweg 7
D-6457 Maintal 1(DE)

(74) Vertreter: Dipl.-Phys.Dr. Manitz
Dipl.-Ing.Dipl.-Wirtsch.-Ing. Finsterwald
Dipl.-Phys. Rotermund Dipl.-Chem.Dr. Heyn
B.Sc.(Phys.) Morgan
Robert-Koch-Strasse 1
D-8000 München 22(DE)

(54) Vorrichtung zur Halterung von Kotflügeln.

(57) Es wird eine Kotflügelhalterung beschrieben, die über ein zwischen Trägerrohr (2) und Kotflügel (1) angeordnetes Auflageteil (3) sowie eine zugeordnete Klemmhaube (5) und eine kotflügelinnenseitig vorgesehen Gegenplatte (4) form- und kraftschlüssig mit dem Kotflügel (1) verspannbar ist und zusätzlich über die Klemmhaube (5) und Seitenhaubenteile (10) nach außen hin abgeschottet werden kann.

EP 0 411 342 A1

Die Erfindung betrifft eine Vorrichtung zur Halterung von Kotflügeln an fahrzeugfesten Trägerrohren, bestehend aus einer das jeweilige Trägerrohr umgreifenden Klemmeinheit sowie sich von dieser Klemmeinheit zum Kotflügel erstreckenden und an diesem befestigbaren Verbindungsorganen.

Kotflügelhalterungen dieser Art sind in verschiedenen Ausführungsformen bekannt, wobei die Klemmeinheit üblicherweise aus einer Metallschelle besteht und ein Schellenteil zur Schaffung von Verbindungsorganen verlängert ausgebildet und mit dem jeweiligen Kotflügel verschraubbar ist. Bekannt ist es auch bereits, Halterungsteile in den Kunststoff des Kotflügels zu integrieren und eine Verbindungsmöglichkeit zwischen diesen integrierten Teilen und den zugehörigen schellenartigen Klemmteilen zu schaffen.

Nachteilig ist bei den Kotflügelhalterungen vor allem, daß sie korrosionsanfällig sind, häufig hinsichtlich des Orts der Anbringung am Kotflügel Beschränkungen unterliegen und auch einen störenden Aufwand sowohl bei der Montage als auch Demontage erfordern.

Aufgabe der Erfindung ist es, eine Vorrichtung der eingangs definierten Art in einer wirtschaftlich zu realisierenden Weise derart auszubilden, daß unter Schaffung einer sehr kompakten Anordnung Korrosionsgefahren weitestgehend ausgeschaltet werden, eine einfache und schnelle Montage sowie Demontage ermöglicht wird und hinsichtlich der Wahl des Befestigungsortes am Kotflügel keinerlei störende Beschränkungen gegeben sind.

Gelöst wird diese Aufgabe nach der Erfindung im wesentlichen dadurch, daß die Verbindungsorgane zu einem blockförmigen, zugleich einen Bestandteil der Klemmeinheit bildenden Auflageteil zusammengefaßt sind, und daß das Auflageteil über eine an der Kotflügelinnenseite angeordnete Gegenplatte mittels das Auflageteil durchsetzender Schraubbolzen bezüglich des Kotflügels und gleichzeitig mittels einer Stützflächen für die Köpfe dieser Schraubbolzen aufweisenden Klemmhaube am Trägerrohr fixierbar ist.

Durch die Schaffung eines Auflageteils, das in Verbindung mit der Klemmhaube zu einer form- und kraftschlüssigen Verbindung zwischen Trägerrohr und Kotflügel führt, wird eine äußerst kompakte Halterung geschaffen, bei der die praktisch ohne freiliegende Gewindebereiche angeordneten Schraubbolzen eine Doppelfunktion dahingehend erfüllen, daß sie einerseits die erforderliche Klemmung bezüglich des Trägerrohrs und andererseits die Befestigung bezüglich des Kotflügels gewährleisten.

Im Vergleich zu herkömmlichen Anordnungen, bei denen Verbindungsorgane über Schrauben-Mutter-Verbindungen am Kotflügel befestigt werden, ist es gemäß der Erfindung von Vorteil, daß zwischen dem blockförmigen Auflageteil und der Gewindebohrungen für die Schraubbolzen aufweisenden und insbesondere in ihrer Krümmung dem Kotflügel angepaßten Gegenplatte ein großflächiger Klemmbereich geschaffen wird. Ein solcher großflächiger Klemmbereich erbringt einerseits eine stabile und dauerhafte Verbindung und gestattet es andererseits, kleinflächige, leicht zu einer Beschädigung des Kotflügels führende Klemmstellen zu vermeiden.

Gemäß einer vorteilhaften Ausgestaltung der Erfindung sind an dem blockförmigen Auflageteil insbesondere zylindrisch ausgebildete Gewindebuchsen zur Aufnahme der Schraubbolzen angebracht, deren Axialerstreckung derart gewählt ist, daß sie eine entsprechende Kotflügelöffnung durchsetzen und im wesentlichen formschlüssig in Paßaufnahmen eingreifen, die im Auflageteil vorgesehen sind.

Diese Gewindebuchsen erbringen zum einen eine erwünschte Vergrößerung des Schraubbolzenführungsbereichs im zugehörigen Gewinde und haben ferner den Vorteil, daß aufgrund der vorgesehenen Paßaufnahmen im Auflageteil ein gewisses Lösen der Schraubbolzen und damit der Klemmhaube ermöglicht wird, ohne daß gleichzeitig der Zusammenhalt zwischen Kotflügel, Auflageteil und Gegenplatte in störender Weise verringert wird. Dieser Sachverhalt wirkt sich bei der Montage und Demontage günstig aus.

Ein weiteres für die Erfindung wesentliches Merkmal besteht darin, daß die unter Einschluß des Trägerrohrs gegen das Auflageteil verspannbare Klemmhaube das Auflageteil unter Freilassung von Durchtrittsöffnungen für das Trägerrohr allseitig übergreift.

Auf diese Weise wird eine in die Klemmeinheit integrierte Verkleidung geschaffen, welche den Halterungsbereich gegen den Kotflügel abschließt, die einzelnen Befestigungselemente gegen Schmutzeinwirkung abschirmt und ein formschönes, ästhetisches Erscheinungsbild der gesamten Halterung gewährleistet, wobei letzterer Aspekt vor allem dann zum Tragen kommt, wenn die Klemmhaube sich quer zum Trägerrohr erstreckende, die Haubenkontur fortsetzende und auf dem Kotflügel abgestützte Seitenhaubenteile aufweist.

Auflageteil und Klemmhaube bestehen bevorzugt aus Kunststoff, wobei in die Klemmhaube gegebenenfalls eine Metallverstärkung integriert sein kann. Als Gegenplatte wird zweckmäßigerweise eine mit Kunststoff ummantelte Metallplatte verwendet, so daß insgesamt eine bezüglich Korrosion unanfällige Einheit erhalten wird.

Die Vorrichtung nach der Erfindung kann wahlweise an verschiedenen Positionen des Kotflügels je nach Lage des Trägerrohres befestigt werden, wobei insbesondere eine im Kotflügel eingeprägte Sicke mit Langloch oder positionsabhängig anzubringenden Öffnungen die Fixierung nach entsprechendem Verschieben erleichtert.

Auflageteil und Klemmhaube können durch Vorsehen eines entsprechenden Gelenks praktisch als einteilige Anordnung ausgeführt werden, bei der der erforderliche Klemmeffekt über einen einzigen Gewindebolzen erzielbar ist.

Weitere vorteilhafte Ausgestaltungen der Erfindung sind in Unteransprüchen angegeben.

Die Erfindung wird nachfolgend unter Bezugnahme auf die Zeichnung anhand eines Ausführungsbeispiels erläutert; in der Zeichnung zeigt:

Fig. 1 eine schematische Schnittansicht einer Vorrichtung nach der Erfindung im montierten Zustand,

Fig. 2 eine schematische Draufsicht einer Vorrichtung nach der Erfindung, und

Fig. 3 eine schematische Teildarstellung eines Kotflügels mit zwei Halterungsvorrichtungen gemäß der Erfindung.

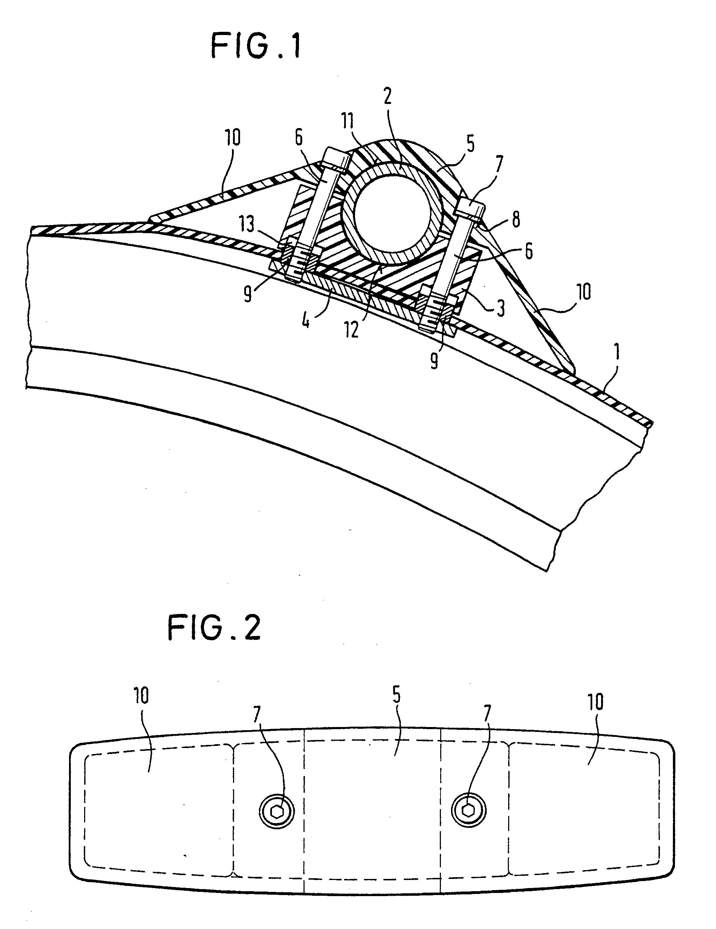

Fig. 1 zeigt einen insbesondere aus Kunststoff bestehenden Kotflügel 1, der bezüglich eines fahrzeugfesten Trägerrohrs 2 befestigt werden muß.

Dazu ist eine Halterungsvorrichtung vorgesehen, die im wesentlichen aus einem Kunststoff-Auflageteil 3, einer ebenfalls aus Kunststoff bestehenden oder von einem mit Kunststoff ummantelten Metallteil gebildeten Klemmhaube 5 sowie einer Gegenplatte 4 besteht, welche radseitig innerhalb des Kotflügels 1 angeordnet ist und Gewindeaufnahmen für Schraubbolzen 6 besitzt. Durch gegenseitiges Verspannen dieser drei Elemente, nämlich der Klemmhaube 5, des Auflageteils 3 und der Gegenplatte 4 unter Einschluß eines Trägerrohres 2 wird eine form- und kraftschlüssige Verbindung zwischen Trägerrohr 2 und Kotflügel 1 geschaffen.

Die vergleichsweise großflächige, der Querschnittsform des Auflageteils 3 angepaßte Gegenplatte 4, die entsprechend der Kotflügelkrümmung geformt sein kann, gewährleistet eine großflächige Klemmung zwischen der Halterungseinrichtung und dem Kotflügel, wodurch jegliches Kriechen des Kotflügelmaterials, wie es beispielsweise bei Verwendung von Federringen auftritt, ausgeschlossen wird.

Die Aufnahmegewinde für die Schraubbolzen 6 können in der Gegenplatte 4 und/oder in Gewindebuchsen 9 vorgesehen sein, die fest mit der Gegenplatte 4 verbunden sind und in Paßaufnahmen 13 im Auflageteil 3 im wesentlichen formschlüssig eingreifen.

Auf diese Weise wird ein durch Klemmeffekte bewirkter Zusammenhalt zwischen Auflageteil 3 und Gegenplatte 4 geschaffen, der es auch ermöglicht, die Schraubbolzen 6 über deren an Stützflächen 8 der Klemmhaube 5 abgestützte Bolzenköpfe 7 so weit zu lösen, daß eine Montage oder Demontage und insbesondere eine positionsgenaue Ausrichtung des Kotflügels möglich ist, ohne daß der Zusammenhalt der Gesamtanordnung verlorengeht.

Auflageteil 3 und Klemmhaube 5 besitzen etwa halbkreisförmige Ausnehmungen 11, 12 zur Aufnahme des Trägerrohrs, und mittels zweier Klemmbolzen 6 ist es möglich, schnell und problemfrei eine dauerhafte Klemmung zwischen Auflageteil 3, Klemmhaube 5 und Trägerrohr 2 unter gleichzeitiger form- und kraftschlüssiger Abstützung und Klemmung am Kotflügel 1 zu erreichen.

Bevorzugt übergreift die Klemmhaube 5 das Auflageteil 3 unter Freilassung von Durchtrittsöffnungen für das Trägerrohr 2 allseitig, wobei speziell quer zum Trägerrohr 2 sich erstreckende, die Haubenkontur fortsetzende und auf dem Kotflügel 1 abgestützte Seitenhaubenteile 10 vorgesehen bzw. an die Klemmhaube 5 angeformt sind, welche die gesamte Befestigungseinheit nach außen hin abschotten und zu einer formschönen und auch leicht zu reinigenden Anordnung führen.

Die Draufsicht nach Fig. 2 läßt die Umfangskontur der mit den Seitenhaubenteilen 10 versehenen Klemmhaube 5 erkennen, und diese Darstellung verdeutlicht auch, daß durch diese Art der in das Befestigungssystem integrierten Verkleidung freiliegende Befestigungselemente vermieden werden können und nur die Bolzenköpfe 7 von außen zugänglich sind. Alle Gewindebereiche befinden sich in geschützter Position und können damit auch nicht wie bei herkömmlichen Anordnungen verschmutzen und korrodieren.

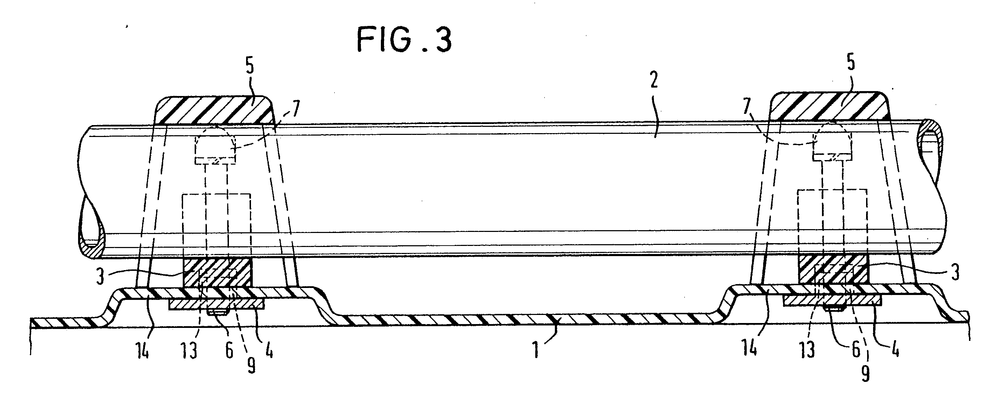

Fig. 3 zeigt ein Beispiel für die Befestigung eines Kotflügels 1 mittels zweier erfindungsgemäßer Vorrichtungen an einem Trägerrohr 2. Dabei ist der Kotflügel 1 mit Sicken 14 versehen, wobei eine solche eingeprägte Sicke 14 die positionsgenaue Anbringung der Halterung durch Verschieben innerhalb der mit einem entsprechenden Langloch ausgestatteten Sicke erleichtert.

Aufgrund der Tatsache, daß mittels lediglich zweier Schraubbolzen 6 sowohl ein Festklemmen des Trägerrohrs 2 wie auch die Befestigung der gesamten Halterung am Kotflügel 1 erfolgen kann, ergibt sich eine ausgesprochen montagefreundliche Lösung. Die erfindungsgemäße Ausgestaltung dieser Vorrichtung begünstigt den Einsatz reiner Kunststoffteile oder gegebenenfalls metallverstärkter Kunststoffteile, und es ist sogar denkbar, daß als Schraubbolzen Kunststoff-Schraubbolzen Verwendung finden, wodurch jegliche korrosionsempfindlichen Bestandteile vermieden werden können.

Die Ausgestaltung von Klemmhaube 5 und Seitenhaubenteilen 10 gestattet auch eine problemfreie Anpassung an etwas unterschiedliche Kotflügelformen, da die Haubenteile im Rahmen ihrer Eigenelastizität verformbar sind und sich durch allseitige Aufweitung oder Verengung der jeweiligen Kotflügelform unter Gewährleistung einer umfangsmäßigen Anlage am jeweiligen Kotflügel anpassen.

Die insgesamt formschöne Anordnung weist ferner den Vorteil auf, daß sie aus einer geringstmöglichen Anzahl von Teilen besteht und trotzdem im Vergleich zu herkömmlichen Anordnungen Zusatzfunktionen aufweist, wie sie beispielsweise in der form- und kraftschlüssigen Abstützung oder der allseitigen Umschließung der Gesamtanordnung durch Klemmhaube und Seitenhaubenteile zu sehen sind.

Bezugszeichenliste

1 Kotflügel
2 Trägerrohr
3 Auflageteil
4 Gegenplatte
5 Klemmhaube
6 Schraubbolzen
7 Bolzenkopf
8 Stützfläche
9 Gewindebuchse
10 Seitenhaubenteil
11 Ausnehmung
12 Ausnehmung
13 Paßaufnahme
14 Sicke

**Ansprüche**

1. Vorrichtung zur Halterung von Kotflügeln an fahrzeugfesten Trägerrohren, bestehend aus einer das jeweilige Trägerrohr umgreifenden Klemmeinheit sowie sich von dieser Klemmeinheit zum Kotflügel erstreckenden und an diesem befestigbaren Verbindungsorganen,
dadurch **gekennzeichnet,**
daß die Verbindungsorgane zu einem blockförmigen, zugleich einen Bestandteil der Klemmeinheit bildenden Auflageteil (3) zusammengefaßt sind, und daß das Auflageteil (3) über eine an der Kotflügelinnenseite angeordnete Gegenplatte (4) mittels das Auflageteil (3) durchsetzender Schraubbolzen (6) bezüglich des Kotflügels (1) und gleichzeitig mittels einer Stützflächen (8) für die Köpfe (7) dieser Schraubbolzen (6) aufweisenden Klemmhaube (5) am Trägerrohr (2) fixierbar ist.
2. Vorrichtung nach Anspruch 1,
dadurch **gekennzeichnet,**
daf zwischen dem blockförmigen Auflageteil (3) und der Gewindebohrungen für die Schraubbolzen (6) aufweisenden und insbesondere in ihrer Krümmung dem Kotflügel (1) angepaßten Gegenplatte (4) ein großflächiger Klemmbereich ausgebildet ist.
3. Vorrichtung nach Anspruch 1 oder 2,
dadurch **gekennzeichnet,**
daß an dem blockförmigen Auflageteil (3) insbesondere zylindrisch ausgebildete Gewindebuchsen (9) zur Aufnahme der Schraubbolzen (6) angebracht sind, deren Axialerstreckung derart gewählt ist, daß sie eine entsprechende Kotflügelöffnung durchsetzen und im wesentlichen formschlüssig in Paßaufnahmen (13) eingreifen, die im Auflageteil (3) vorgesehen sind.
4. Vorrichtung nach einem der vorhergehenden Ansprüche,
dadurch **gekennzeichnet,**
daß das Auflageteil (3) fahrzeugseitig eine im Querschnitt teilkreis- und insbesondere halbkreisförmige Ausnehmung (12) zur Aufnahme des Trägerrohrs (2) besitzt.
5. Vorrichtung nach einem der vorhergehenden Ansprüche,
dadurch **gekennzeichnet,,**
daß die unter Einschluß des Trägerrohrs (2) gegen das Auflageteil (3) verspannbare Klemmhaube (5) das Auflageteil (3) unter Freilassung von Durchtrittsöffnungen für das Trägerrohr (2) allseitig übergreift.
6. Vorrichtung nach Anspruch 5,
dadurch **gekennzeichnet**
daß die Klemmhaube (5) sich quer zum Trägerrohr (2) erstreckende, die Haubenkontur fortsetzende und auf dem Kotflügel (1) abgestützte Seitenhaubenteile (10) aufweist.
7. Vorrichtung nach einem der vorhergehenden Ansprüche,
dadurch **gekennzeichnet,**
daß das Auflageteil (3) und die Klemmhaube (5) aus Kunststoff bestehen und die Gegenplatte (4) von einer mit Kunststoff ummantelten Metallplatte gebildet ist.
8. Vorrichtung nach Anspruch 7,
dadurch **gekennzeichnet,**
daß in das Kunststoffmaterial der Klemmhaube (5) ein teil-schellenförmiges, Öffnungen für den Durchtritt der Schraubbolzen (6) aufweisendes Metallteil integriert ist.
9. Vorrichtung nach einem der vorhergehenden Ansprüche,
dadurch **gekennzeichnet,**
daß als Schraubbolzen (7) Kunststoff-Schraubbolzen verwendet sind.
10. Vorrichtung nach einem der vorhergehenden Ansprüche,
dadurch **gekennzeichnet,**
daß die Klemmhaube (5) im Klemmbereich ein Schwenkgelenk mit parallel zum Trägerrohr (2) verlaufender Schwenkachse aufweist und das Trägerrohr (2) durch Betätigen eines einzigen Spannbolzens befestigt oder gelöst werden kann.

11. Vorrichtung nach einem der vorhergehenden Ansprüche,
dadurch **gekennzeichnet,**
daß die Auflageflächen für das Trägerrohr (2) in den Ausnehmungen (11, 12) in der Klemmhaube (5) bzw. dem Auflageteil (4) gerippt ausgebildet sind.

# FIG.1

# FIG.2

FIG.3

## EUROPÄISCHER RECHERCHENBERICHT

EP 90112967.6

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| A | DE - A1 - 3 045 325 (BÄWA BÄTZOLD & WAGNER) * Gesamt * -- | 1,2,4, 5,10 | B 62 D 25/16 |
| A | DE - A1 - 2 921 160 (BÄWA BÄTZOLD & WAGNER) * Gesamt * -- | 1,4,5, 11 | |
| A | EP - A1 - 0 265 647 (GERD SCHULZ FAHRZEUG -UND CONTAINER TECHNIK) * Gesamt * ---- | 1,4,5, 6 | |

RECHERCHIERTE
SACHGEBIETE (Int Cl.⁵)

B 62 D

Der vorliegende Recherchenbericht wurde für alle Patentansprüche erstellt.

| Recherchenort | Abschlußdatum der Recherche | Prüfer |
|---|---|---|
| WIEN | 07-11-1990 | SCHMICKL |